# EUROPEAN PATENT APPLICATION

(11) **EP 2 506 118 A1**
(43) Date of publication of application: **03.10.2012**
(21) Application number: 11160253.8
(22) Date of filing: 29.03.2011
(51) Int. Cl.: G06F 3/01, G06F 3/033

(54) **Virtual pointer**

(71) Applicant: Sony Ericsson Mobile Communications AB, 221 88 Lund (SE)
(72) Inventor: Jonsson, Håkan, 245 65, Hjärup (SE)
(74) Representative: Szelagowski, Helen

(57) **Abstract**

Embodiments herein relate to a method in an electronic device (101) for enabling display of a virtual object (107) representing a real object on a remote digital display (105). The device (101) generates a virtual beam (103), which beam (103) is displayed on the display (105). The device directs the beam (103) towards the object (107) displayed on the display (105) by moving the device (101) from a first position and orientation to a second position and orientation. The device (101) determines the second position and orientation of the device (101) in relation to the beam (103), and selects the object (107) to which the beam (103) is directed based on the determined orientation and position. The device (101) transfers information about the selected object (107) to the display (105), enabling display of the selected object (107) or a representation of the selected object (107) on the display (105).

## Description

### TECHNICAL FIELD

Embodiments herein relate generally to augmented reality. More particularly the embodiments herein relate to an electronic device and a method in the electronic device for enabling display of a virtual object representing a real object on a remote digital display.

### BACKGROUND

Augmented reality (AR) is a term for a live direct or indirect view of a physical real-world environment whose elements are augmented by virtual computer-generated sensory input such as sound or graphics. AR combines real and virtual, is interactive in real time and is registered in two dimensions (2D) or three dimensions (3D). As a result of AR, the technology functions by enhancing one's current perception of and interaction with the real world. By contrast, virtual reality replaces the real-world with a simulated one. With the help of advanced AR technology, information about the surrounding real world of the user becomes interactive and digitally manipulable. AR allows the user to see the real world, with virtual objects superimposed upon or composited with the real world. AR technology may enable a human to participate in an activity in a virtual world by translating the human user's movements or activity within a defined area or volume of the real world into the desired response in the virtual world.

AR may be used in several different types of applications, such as medicine, military, robotics, entertainment, etc.

An AR system may comprise different devices, such as e.g. display, tracking devices, input devices, sensors and processor. The display may be a head-mounted display, a handheld display or a spatial display. Input devices may be for example a keyboard, mouse buttons, bumper buttons, a touch pad etc.

Input has been a problem with mobile devices due to limited size of keyboards, screens etc. The problem becomes even bigger when moving to a visor form factor for AR, since it is not obvious what the input devices are at all. Gaze tracking, voice input, gestures etc all have their problems, both in terms of technical feasibility and social acceptance.

### SUMMARY

The objective of embodiments herein is therefore to obviate at least one of the above disadvantages and to provide improved interaction with virtual objects displayed on digital displays.

According to a first aspect, the objective is achieved by a method in an electronic device for enabling display of a virtual object representing a real object on a remote digital display. The electronic device is placed in a first position and a first orientation. The virtual object is displayed on the remote digital display. The electronic device generates a virtual beam. The virtual beam is displayed on the remote digital display, and directs the virtual beam towards the virtual object displayed on the digital display by moving the electronic device from the first position and the first orientation to a second position and a second orientation. The electronic device determines the second position and the second orientation of the device in relation to the virtual beam. The electronic device selects the virtual object to which the virtual beam is directed based on the determined orientation and position. The electronic device transfers information about the selected virtual object to the remote digital display. The information enables display of the selected virtual object or a representation of the selected virtual object on the remote digital display.

According to a second aspect, the objective is achieved by an electronic device for enabling display of a virtual object representing a real object on a remote digital display. The electronic device is placed in a first position and a first orientation. The virtual object is displayed on the remote digital display. The electronic device comprises a beam generating unit configured to generate a virtual beam. The virtual beam is displayed on the remote digital display. The electronic device further comprises a processing unit configured to direct the virtual beam towards the virtual object displayed on the digital display by movement of the electronic device from the first position and the first orientation to a second position and a second orientation. A determining unit, comprised in the electronic device, is configured to determine the second position and the second orientation of the device in relation to the virtual beam. The electronic device further comprises a selecting unit configured to select the virtual object to which the virtual beam is directed based on the determined orientation and position. Further, the electronic device comprises a transferring unit configured to transfer information about the selected digital picture to the remote digital display. The information enables display of the selected virtual object or a representation of the selected virtual object on the remote digital display.

Since movement of the electronic device corresponds to movement of the electronic beam, improved interaction with virtual objects displayed on digital displays is provided. Virtual objects related to real world objects are interacted with using the electronic device and the virtual beam.

Embodiments herein afford many advantages, of which a non-exhaustive list of examples follows:
An advantage with the embodiments herein is that it makes it possible to interact with AR applications in a natural way, without having the undesirable properties of voice- and gesture commands. Furthermore, it comes with a very compelling proposition that gives users a new way of interacting with everyday objects.

Embodiments herein allows launch of AR products without requirements for other input devices and technologies, e.g. gaze tracking, speech recognition, gesture tracking, which may not be technically feasible or socially acceptable.

The embodiments herein are not limited to the features and advantages mentioned above. A person skilled in the art will recognize additional features and advantages upon reading the following detailed description.

### BRIEF DESCRIPTION OF THE DRAWINGS

The embodiments herein will now be further described in more detail in the following detailed description by reference to the appended drawings illustrating the embodiments and in which:
- Fig. 1: is a block diagram illustrating embodiments of an augmented reality system.
- Fig. 2: is a block diagram illustrating embodiments of an augmented reality system.
- Fig. 3: is a combined signaling diagram and flowchart illustrating embodiments of a method.
- Fig. 4: is a flow chart illustrating embodiments of a method in an electronic device.
- Fig. 5: is a block diagram illustrating embodiments of an electronic device.

The drawings are not necessarily to scale and the dimensions of certain features may have been exaggerated for the sake of clarity. Emphasis is instead placed upon illustrating the principle of the embodiments herein.

### DETAILED DESCRIPTION

The embodiments herein enable to manipulation of AR objects in an AR space and to create the impression that an AR object is a part of the real world.

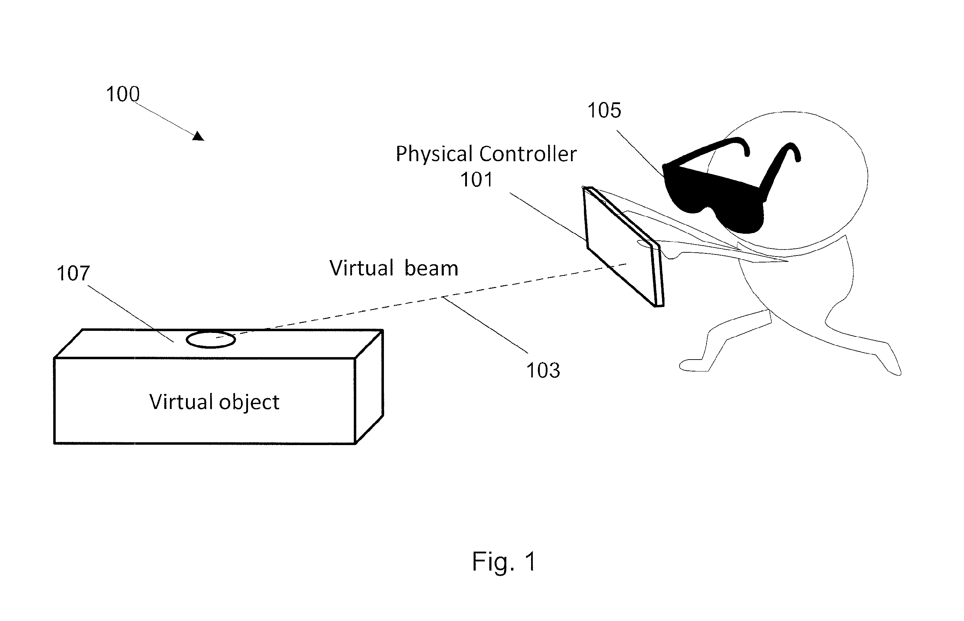

**Figure 1** is a schematic diagram illustrating an embodiment of an **AR system 100**. In some embodiments, the AR system 100 comprises at least the following parts:
1) An **electronic device 101**.
2) A virtual pointer **beam 103**.
3) A digital **display 105**

The electronic device 101 is a physical device for controlling the movements or actions of an AR object, such as the virtual pointer beam 103 shown in the display 105. The electronic device 101 is connected to the display 105 by means of a wireless link or a wired link (not shown). The electronic device 101 may be in the form of a handheld controller, i.e. it has a design, size and weight suitable to be held by a user. In the following description, the term controller will be used when describing the electronic device. However, as understood by the skilled person, any other suitable type of electronic device may also be equally applicable. The reference number 101 will also be used when referring to the controller.

In some embodiments, the controller 101 is integrated into e.g. a mobile phone, smart phone, personal digital assistant (PDA), laptop, MP3 player, digital camera, keyboard, touchpad, an embedded communication device in e.g. electronic photo frames, intrusion or other surveillance equipment, vehicle, car or transport communication equipment, medical devices etc. In some embodiments, the controller 101 is an independent electronic device 101 capable of communicating, e.g. wirelessly, with a mobile phone and the display 105.

The display 105 is a digital display which may be for example a Head Mounted Display (HMD), such as a visor or AR glasses. The display 105 may have computational, communication and rendering capabilities. The user sees virtual representations of the real world in the display 105. The virtual representations may be seen in two or three dimensions. The display 105 is positioned in distance from the controller 101, i.e. it is a remote digital display in relation to the controller 101. In the following, an AR visor will be used as an example, and the reference number 105 will also refer to the example AR visor.

The controller 101 comprises an input unit such as for example a selection unit. The selection unit has functions similar to click and double-click and may be for example bumper buttons. Further, the controller 101 may be equipped with an input unit such as a keyboard and/or a touchpad for the user of the controller 101 to provide input to the controller. In some embodiments, the keyboard is a regular keyboard and in some embodiments, the touchpad is a keyboard provided on the touchpad where the keys are selected using a finger or a stylus etc. The keyboard may be a qwerty keyboard placed on one side of the controller 101, e.g. on the top of the controller 101, a touchpad on the other side, e.g. on the back of the controller 101, and two bumper buttons on one of the sides, e.g. on the top of the controller 101. The user may use his/hers thumbs for text input on the keyboard while the touchpad and bumper buttons may be used for selection of objects as well as for dragging/dropping etc. The controller 101 is used to direct the beam 103 through its orientation.

To calculate where to render the beam 103 on the display 105 and determine where it hits virtual objects 107 to show the pointer, the position and the orientation of the controller 101 has to be known. The orientation may be known through a gyro (not shown) comprised in the controller 101. The position of the controller 101 relative to the display 105 may be determined either through an assumption or through a proximity sensor. A proximity sensor is a sensor which is able to detect the presence of nearby objects without any physical contact. This position measurement does not have to be very exact since it may be assumed that the user will hold the controller 101 in a position mainly limited by the length of his/hers arms.

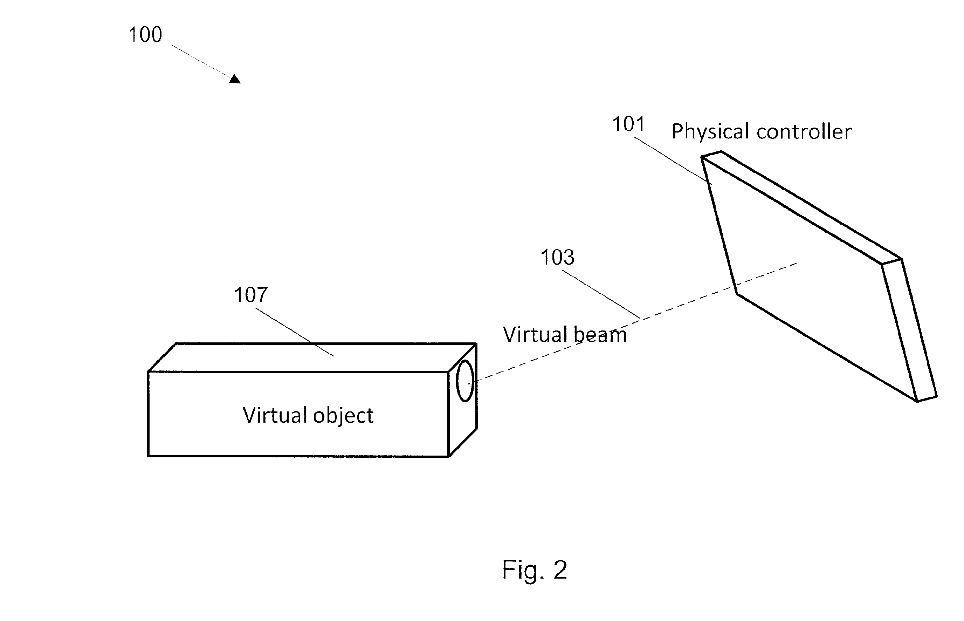

When the orientation of the controller 101 is changed, e.g. tipped forward, the pointer beam 103 maintains its perpendicular relation to the controller 101. As the beam then changes direction, it will hit other objects and thus change where the pointer is shown, as illustrated in **Figure 2****.** Further, the display 105 may also be equipped with a gyro to determine its relative orientation and position to the controller 101, but this is anyhow required to be able to render the augmented reality virtual objects.

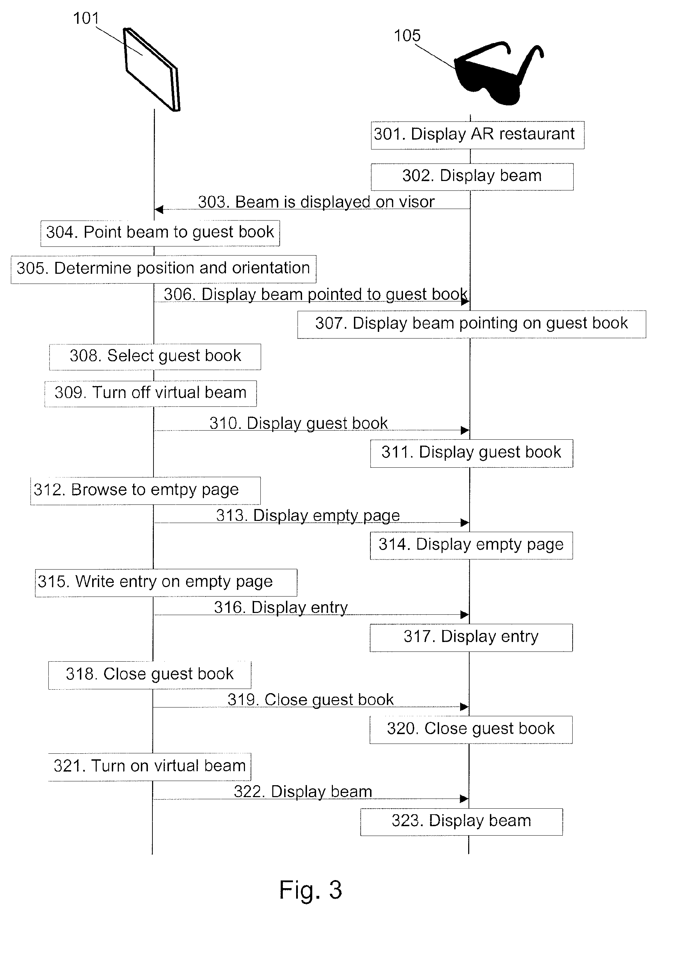

The method for manipulating AR objects according to some embodiments will now be described with reference to the combined signaling diagram and flowchart depicted in **Figure 3** illustrating an example involving the controller 101, beam 103, visor 105, keyboard, touchpad and bumper buttons. The method comprises the following steps, which steps may as well be carried out in another suitable order than described below.

### Step 301

A user holds the controller 101 in its hands, and a real-world scene of his/hers favorite restaurant is augmented in 2D or 3D with computer graphics displayed in the visor 105. The user holding the controller 101 wants to e.g. write a comment in an electronic guest book of the restaurant.

For example, a real world object may be recognized or located and identified using tags, visual object recognition, markers or some other means.

Once it has been identified the visor 105 typically displays some representation of the real world object. The representation of the real world object may be for example a picture of the object, an icon or an aura, an avatar etc.

### Step 302

In the visor 105, a virtual beam 103 is displayed to the user. The virtual beam 103 is displayed perpendicular to the controller 103 as shown in Figure 1. The beam 103 may end in a pointer. The pointer may be seen by the user as for example an arrow, hand or any suitable type of marker.

### Step 303

The visor 105 provides the controller 101 with information that the virtual beam 103 has been displayed on the visor 105.

### Step 304

The user holding the controller 101 points the virtual beam 103 towards a virtual object 107 or a representation of a virtual object 107 in an AR model of the world that is shown to the user. The user points the virtual beam 103 by moving the controller 101 from a first position and first orientation to a second position and second orientation. In other words, movements of the controller correspond to movements of the virtual beam 103 seen in the visor 105. In this example, the virtual object 107 is a virtual guest book in the restaurant, and the user points the beam 103 at the guest book.

### Step 305

The controller 101 determines its new position and orientation. To calculate where to render the beam 103 and determine where it hits virtual objects 107 to show the pointer, the position and the orientation of the controller 101 has to be known. The orientation may be known through a gyro in the controller 101. The position of the controller 101 relative to the visor 105 may be determined either through assumption or through a proximity sensor. This measurement does not have to be very exact since it may be assumed that the user will mostly hold the controller 101 in the same place relative to his/hers body.

When the position and/or orientation of the controller 101 is changed, e.g. tipped forward, the beam 103 maintains its perpendicular relation to the controller 101. As the beam 103 then changes direction, it will hit other objects and thus change where the pointer is displayed to the user in the visor 105, as illustrated in Figure 2. Further, the visor 105 may also be equipped with a gyro to determine its relative orientation and position to the controller 101, but this is anyhow required to be able to render the augmented reality virtual objects.

### Step 306

The controller 101 provides the visor 105 with information about where the pointer of the beam 103 should be displayed on the visor 105.

### Step 307

The visor 105 displays the beam 103 pointing on the guest book.

### Step 308

The user selects the virtual guest book by using the selection unit on the controller 101, e.g. by using a bumper button.

### Step 309

The controller 101 turns off the virtual beam 103.

### Step 310

The controller 101 provides information to the visor 105 that the guest book is selected and that the guest book should be displayed to the user.

### Step 311

The guest book pops ups on the visor 105, to show entries which may be browsed. The user may browse the pages and entries of the guest book by using a touchpad on the controller 101. In the example of the restaurant guest book, the entries may be comments or reviews from other visitors of the restaurant.

### Step 312

The user browses to an empty page in the virtual guest book. This may be done by using the touch pad. The user selects the empty page by providing e.g. a double tap on the touchpad, to make it editable.

### Step 313

The controller 101 provides information to the visor 105 that the user has browsed to an empty page and that the empty page should be displayed on the visor 105.

### Step 314

The visor 105 displays the empty page.

### Step 315

The user writes his entry in the guest book by using the keyboard. As mentioned above, the keyboard may be a regular keyboard provided e.g. on the back of the controller 101 or it may be a keyboard shown on the touch screen of the controller 101.

### Step 316

The controller 101 provides information to the visor 105 that the user has written an entry in the guest book and that the entry should be displayed on the visor 105.

### Step 317

The visor 105 displays the entry.

### Step 318

The user taps a bumper button, e.g. the left bumper button, to close the guest book, i.e. the guest book pops down.

### Step 319

The controller 101 provides information to the visor 105 that the user has closed the guest book.

### Step 320

The visor 105 closes the displayed guest book.

### Step 321

When the guest book is closed, the virtual beam 103 is turned on.

### Step 322

The controller 101 provides information to the visor 105 that the beam 103 should be turned on again.

### Step 323

The visor 105 displays the beam 103.

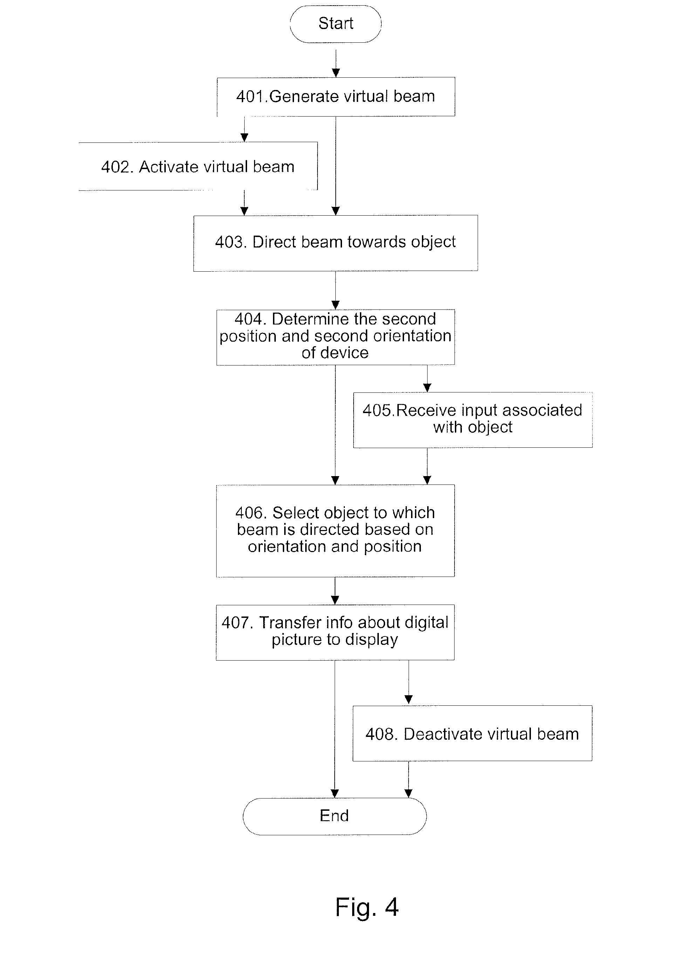

The method described above will now be described seen from the perspective of the electronic device 101. Figure 4 is a flowchart describing the present method in the electronic device 101 for enabling display of a virtual object 107 representing a real object on a remote digital display 105. In some embodiments, the digital display 105 is an augmented reality head-mounted visor, an augmented reality handheld display or an augmented reality spatial display. As mentioned above, the electronic device is placed in a first position and a first orientation. The virtual object 107 is displayed on the remote digital display 105. The method comprises the steps to be performed by the electronic device 101, which steps may be performed in any suitable order:

### Step 401

The electronic device 101 generates a virtual beam 103. The virtual beam 103 is displayed on the remote digital display 105.

### Step 402

In some embodiments, the electronic device activates the virtual beam 103.

### Step 403

The electronic device 101 directs the virtual beam 103 towards the virtual object 107 displayed on the digital display 105 by moving the electronic device 101 from the first position and the first orientation to a second position and a second orientation.

### Step 404

The electronic device 101 determines the second position and the second orientation of the device 101 in relation to the virtual beam 103.

In some embodiments, the second orientation of the electronic device 101 is determined by using a gyro and wherein the second position of the electronic device 101 is determined by assumption or by using a proximity sensor.

### Step 405

In some embodiments, the electronic device 101 receives an input associated with the virtual object.

### Step 406

The electronic device 101 selects the virtual object 107 to which the virtual beam 103 is directed based on the determined orientation and position.

In some embodiment, the selection of the virtual object 107 is based on the received input.

In some embodiments, the selected virtual object 107 or the representation of the selected virtual object 107 is displayed in three dimensions on the remote digital display 105.

### Step 407

The electronic device 101 transfers information about the selected virtual object 107 to the remote digital display 105. The information enables display of the selected virtual object 107 or a representation of the selected virtual object 107 on the remote digital display 105.

### Step 408

In some embodiments, the electronic device 101 deactivates the virtual beam 103.

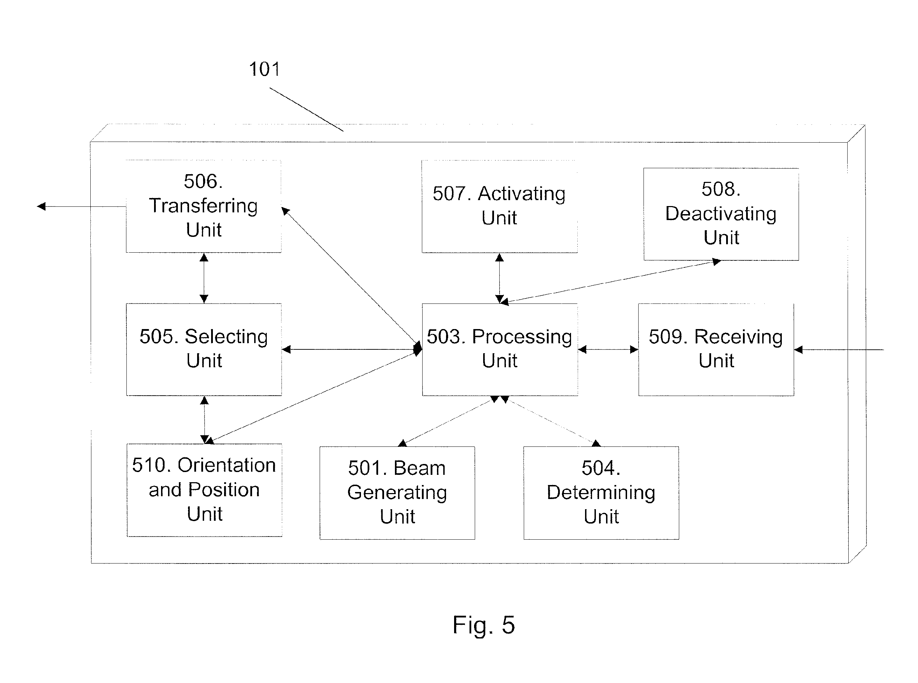

To perform the method steps shown in figure 4 for enabling display of a virtual object 107 representing a real object on a remote digital display 105 the electronic device 101 comprises an arrangement as shown in Figure 5. In some embodiments, the object 107 is a virtual object displayed on the display 105, and the display 105 is an external display or a display comprised in the device 101. In some embodiments, the display 105 is an augmented reality head-mounted visor, an augmented reality handheld display or an augmented reality spatial display. The electronic device 101 is placed in a first position and a first orientation. The virtual object 107 is displayed on the remote digital display 103.

The electronic device 101 comprises a beam generating unit 501 configured to generate a virtual beam 103. The virtual beam 103 is displayed on the remote digital display 105.

The electronic device 101 comprises a processing unit 503 configured to direct the virtual beam 103 towards the virtual object 107 displayed on the digital display 105 by moving the electronic device 101 from the first position and the first orientation to a second position and a second orientation. In some embodiments, the second orientation of the electronic device 101 is determined by using a gyro and wherein the second position of the electronic device 101 is determined by assumption or by using a proximity sensor.

The electronic device 101 further comprises a determining unit 504 configured to determine the second position and the second orientation of the device 101 in relation to the virtual beam 103.

The electronic device 101 comprises a selecting unit 505 configured to select the virtual object 107 to which the virtual beam 103 is directed based on the determined orientation and position. In some embodiments, the selected virtual object or the representation of the selected virtual object is displayed in three dimensions on the remote digital display 105.

Further, the electronic device 101 comprises a transferring unit 506 configured to transfer information about the selected digital object to the remote digital display 105. The information enables display of the selected virtual object 107 or a representation of the selected virtual object 107 on the remote digital display 105.

In some embodiments, the electronic device 101 comprises an activating unit 507 configured to activate the virtual beam 103, and a deactivating unit 508 configured to deactivate the virtual beam 103.

In some embodiments, the electronic device 101 comprises a receiving unit 509 configured to receive input associated with the virtual object 107. In some embodiments, the selecting unit 503 is further configured to select the virtual object 107 based on the received input.

The present mechanism for enabling display of a virtual object 107 representing a real object on a remote digital display 105 may be implemented through one or more processors, such as a processing unit 503 in the electronic device 101 depicted in Figure 5, together with computer program code for performing the functions of the embodiments herein. The processor may be for example a Digital Signal Processor (DSP), Application Specific Integrated Circuit (ASIC) processor, Field-programmable gate array (FPGA) processor or micro processor. The program code mentioned above may also be provided as a computer program product, for instance in the form of a data carrier carrying computer program code for performing the embodiments herein when being loaded into the electronic device 101. One such carrier may be in the form of a CD ROM disc. It is however feasible with other data carriers such as a memory stick. The computer program code may furthermore be provided as pure program code on a server and downloaded to the electronic device 101 remotely.

The embodiments herein are not limited to the above described preferred embodiments. Various alternatives, modifications and equivalents may be used. Therefore, the above embodiments should not be taken as limiting the scope of the embodiments, which is defined by the appending claims.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

It should also be emphasised that the steps of the methods defined in the appended claims may, without departing from the embodiments herein, be performed in another order than the order in which they appear in the claims.

## Claims

1. A method in an electronic device (101) for enabling display of a virtual object (107) representing a real object on a remote digital display (105), which electronic device (101) is placed in a first position and a first orientation, and wherein the virtual object (107) is displayed on the remote digital display (103), the method comprising:
*generating* (401) a virtual beam (103), which virtual beam (103) is displayed on the remote digital display (105);
*directing* (403) the virtual beam (103) towards the virtual object (107) displayed on the digital display (105) by moving the electronic device (101) from the first position and the first orientation to a second position and a second orientation;
*determining* (404) the second position and the second orientation of the device (101) in relation to the virtual beam (103);
*selecting* (406) the virtual object (107) to which the virtual beam (103) is directed based on the determined orientation and position;
*transferring* (407) information about the selected virtual object (107) to the remote digital display (105), which information enables display of the selected virtual object (107) or a representation of the selected virtual object (107) on the remote digital display (105).

2. The method according to claim 1, wherein the second orientation of the electronic device (101) is determined by using a gyro and wherein the second position of the electronic device (101) is determined by assumption or by using a proximity sensor.

3. The method according to any of the claims 1 - 2, further comprising:
*activating* (402) the virtual beam (103); and/or
*deactivating* (408) the virtual beam (103).

4. The method according to any of the claims 1-3, further comprising:
*receiving* (405) an input associated with the virtual object (105); and wherein the selecting the virtual object (107) is based on the received input.

5. The method according to any of the claims 1 - 4, wherein the digital display (105) is an augmented reality head-mounted visor, an augmented reality handheld display or an augmented reality spatial display.

6. The method according to any of the claims 1 - 5, wherein the selected virtual object or the representation of the selected virtual object is displayed in three dimensions on the remote digital display (105).

7. An electronic device (101) for enabling display of a virtual object (107) representing a real object on a remote digital display (105), the electronic device (101) is placed in a first position and a first orientation, and the virtual object (107) is displayed on the remote digital display (103), the electronic device (101) comprising:
a *beam generating unit* (501) configured to generate a virtual beam (103), which virtual beam (103) is displayed on the remote digital display (105);
*a processing unit* (503) configured to direct the virtual beam (103) towards the virtual object (107) displayed on the digital display (105) by movement of the electronic device (101) from the first position and the first orientation to a second position and a second orientation;
*a determining unit* (504) configured to determine the second position and the second orientation of the device (101) in relation to the virtual beam (103);
*a selecting unit* (505) configured to select the virtual object (107) to which the virtual beam (103) is directed based on the determined orientation and position; and
*a transferring unit* (506) configured to transfer information about the selected virtual object to the remote digital display (105), which information enables display of the selected virtual object (107) or a representation of the selected virtual object (107) on the remote digital display (105).

8. The device (101) according to claim 7, wherein the second orientation of the electronic device (101) is determined by using a gyro and wherein the second position of the electronic device (101) is determined by assumption or by using a proximity sensor.

9. The device (101) according to any of the claims 7 - 8, further comprising:
*an activating unit* (507) configured to activate the virtual beam (103); and
*a deactivating unit* (508) configured to deactivate the virtual beam (103).

10. The device (101) according to any of the claims 7 - 9, further comprising:
*a receiving unit* (509) configured to receive input associated with the virtual object (107);
and wherein the selecting unit (503) is further configured to select the virtual object (107) or the representation of the virtual object (107) based on the received input.

11. The device (101) according to any of the claims 7- 10, wherein the object (107) is a virtual object displayed on the display (105), and wherein the display (105) is an external display or a display comprised in the device (101).

12. The device (101) according to any of the claims 7 -11, wherein the display (105) is an augmented reality head-mounted visor, an augmented reality handheld display or an augmented reality spatial display.

13. The device (101) according to any of the claims 7 - 12, wherein the selected virtual object or the representation of the selected virtual object is displayed in three dimensions on the remote digital display (105).
